# EUROPÄISCHE PATENTANMELDUNG

(11) **EP 0 588 333 A2**
(43) Veröffentlichungstag der Anmeldung: **23.03.1994**
(21) Anmeldenummer: 93114876.1
(22) Anmeldetag: 15.09.1993
(51) Int. Cl.: H02G 11/00, F16L 3/01

(54) **Schleppkettenersatz mit Flaschenzug**

(30) Priorität: 16.09.1992 DE 9212468 U
(71) Anmelder: W.L. GORE & ASSOCIATES, D-85640 Putzbrunn (DE)
(72) Erfinder: Haiduk, Herbert, D-91785 Pleinfeld (DE)
(74) Vertreter: Klunker . Schmitt-Nilson . Hirsch

(57) **Zusammenfassung**

Schleppkettenersatz für die Führung einer beispielsweise elektrischen Leitungsanordnung (15) zwischen einer feststehenden Einrichtung (11) und einer linear hin- und her beweglichen Einrichtung (13), mit einer Leitungsumlenkrolle (17), um welche ein zwischen der feststehenden Einrichtung (11) und der beweglichen Einrichtung (13) befindlicher Bereich der Leitungsanordnung (15) unter mindestens teilweiser Umschlingung der Leitungsumlenkrolle (17) schleifenförmig herumgeführt ist und die durch Bewegen der beweglichen Einrichtung (13) unter Abrollen der Leitungsanordnung (15) auf der Leitungsumlenkrolle (17) zwischen zwei auf verschiedenen Seiten der Leitungsumlenkrolle (17) befindlichen Endpunkten mit einer Lineargeschwindigkeit hin- und her beweglich ist, die halb so groß wie die Lineargeschwindigkeit der beweglichen Einrichtung (13) ist, und mit einer zwischen den beiden Endpunkten gespannten Seilanordnung, die an der Leitungsumlenkrolle (17) oder an mindestens einer auf deren Achse angeordneten Seilrolle angreift und mittels welcher die Leitungsumlenkrolle (17) zwischen den beiden Endpunkten hin und her bewegbar ist.
Die Seilanordnung ist als Flaschenzugeinrichtung (31,33) mit mindestens einem Flaschenzug mit einer feststehenden Flaschenzugrolle (35,37) und mindestens einer relativ dazu beweglichen Flaschenzugrolle (39,41) sowie mit einem festen Seilende (51,53) und einem relativ dazu beweglichen freien Seilende (55,57) ausgebildet. Die feststehende Flaschenzugrolle (35,37) ist am einen der beiden Endpunkte angeordnet und die bewegliche Flaschenzugrolle (39,41) ist durch die Leitungsumlenkrolle (17) bzw. die auf deren Achse angeordnete Seilrolle gebildet. Das freie Seilende (55,57) ist um eine an dem anderen der beiden Endpunkte angeordnete Seilumlenkrolle (43,45) herumgeführt und an der beweglichen Einrichtung (13) befestigt .

## Beschreibung

Die Erfindung betrifft einen Schleppkettenersatz für die Führung einer beispielsweise elektrischen Leitungsanordnung zwischen einer feststehenden Einrichtung und einer linear hin- und her beweglichen Einrichtung mit einer Leitungsumlenkrolle, um welche ein zwischen der feststehenden Einrichtung und der beweglichen Einrichtung befindlicher Bereich der Leitungsanordnung unter mindestens teilweiser Umschlingung der Leitungsumlenkrolle schleifenförmig herumgeführt ist und die durch Bewegen der beweglichen Einrichtung unter Abrollen der Leitungsanordnung auf der Leitungsumlenkrolle zwischen zwei auf verschiedenen Seiten der Leitungsumlenkrolle befindlichen Endpunkten mit einer Lineargeschwindigkeit hin- und her beweglich ist, die halb so groß wie die Lineargeschwindigkeit der beweglichen Einrichtung ist, und mit einer zwischen den beiden Endpunkten gespannten Seilanordnung, die an der Leitungsumlenkrolle oder an mindestens einer auf deren Leitungsumlenkrollenachse angeordneten Seilrolle angreift und mittels welcher die Leitungsumlenkrolle zwischen den beiden Endpunkten hin- und her bewegbar ist.

Es besteht häufig die Notwendigkeit, zwischen einer feststehenden Einrichtung und einer hin- und her beweglichen Einrichtung elektrische und/oder optische Energie und/oder fluide Substanzen zu übertragen. Hierfür müssen die feststehende Einrichtung und die bewegliche Einrichtung mittels einer Leitungsanordnung, die meist mehrere Leitungen aufweist, miteinander verbunden werden. Diese Leitungsanordnung muß die Relativbewegung zwischen der feststehenden Einrichtung und der beweglichen Einrichtung einerseits ermöglichen und andererseits problemlos mitmachen.

Mitunter kann die Bewegungsbahn der beweglichen Einrichtung sehr lang sein. Beispielsweise im Fall von automatisierten Produktionsstraßen oder Lagerhallen kann die Strecke, über welche die bewegliche Einrichtung hin- und her bewegt werden muß, durchaus im Bereich von 100 Metern und mehr liegen.

Herkömmlicherweise löst man dieses Problem mit einer sogenannten Schleppkettenanordnung. Diese weist Kettenglieder aus Metall oder Kunststoff auf, die in Längsabständen miteinander durch Stege verbunden sind. Diese Stege halten einerseits die Kettenglieder in definiertem Abstand und halten die einzelnen Leitungen in einer der jeweiligen Form der Schleppkette entsprechenden Position. Wird eine bestimmte Schleppkettenlänge überschritten, hängt das Kettenobertrum soweit nach unten durch, daß es zu einer Ablage des Kettenobertrums auf dem Kettenuntertrum kommt. Die dadurch verursachte Reibung führt nicht nur zu einer Zusätzlichen Belastung des Antriebs für die bewegliche Einrichtung, sondern kann auch zu frühzeitigem Verschleiß der Schleppkette führen. Derartige Reibung und das damit verbundene Geräusch sowie das Geräusch des sich ablegenden Kettenobertrums und das übliche Kettenspiel zwischen den einzelnen Kettengliedern können insbesondere bei schnellen Bewegungen der beweglichen Einrichtung zu einer beträchtlichen Lärmbelästigung führen. Aus diesen Gründen sucht man nach anderen Lösungen.

Ein Schleppkettenersatz der eingangs angegebenen Art ist bekannt aus der EP 0 260 225 B1. Dort ist ein Kabel um 180° um eine Seiltrommel geschlungen, welche mittels zweier Tragsaitenanordnungen freischwebend aufgehängt ist. Die eine Tragsaitenanordnung umfaßt Zwei Tragsaiten, die an ihrem einen Ende je ortsfest eingespannt sind und mit ihrem anderen Ende je eine Seilscheibe am einen bzw. am anderen axialen Ende der Seiltrommel umschlingen und an diesen Seilscheiben befestigt sind. Die andere Tragsaitenanordnung ist durch eine einzige Tragsaite gebildet, die mit ihrem einen Ende an einer Ausgleichsfeder befestigt ist, die ihrerseits ortsfest angeordnet ist, und die mit ihrem anderen Ende eine weitere, in der axialen Mitte der Seiltrommel angeordnete Seilscheibe umschlingt und an dieser befestigt ist. Die Umschlingungsrichtungen der an den äußeren Seilscheiben befestigten Tragsaiten und der an der mittleren Seilscheibe befestigten Tragsaite sind gegensinnig.

Die Tragsaitenanordnung muß stark gespannt sein, um ein zu weites Durchhängen der Seiltrommel zu vermeiden. Die Ausgleichsfeder muß daher eine recht hohe Federspannkraft aufweisen. Eine derartige Kabelführungsvorrichtung eignet sich daher nur für kleine Längen. In der EP 0 260 225 B1 ist als Beispiel eine Länge von 1,3 m angegeben. Außerdem eignet sich diese bekannte Vorrichtung nicht für das Führen einer Kabelanordnung mit beträchtlichem Gewicht.

Ein weiteres Problem besteht darin, daß der Motorantrieb für die bewegliche Einrichtung, über welche auch die Seiltrommel bewegt wird, je nach Bewegungsrichtung entweder die Zusätzliche Kraft zum Spannen der Ausgleichsfeder aufwenden muß oder der von der gespannten Feder ausgeübten Rückführkraft entgegenwirken muß. Der Antriebsmotor muß daher nicht nur eine höhere Antriebskraft aufbringen können, als sie nur zum Bewegen der beweglichen Einrichtung und der Seiltrommel benötigt würde sondern dieser Antriebsmotor muß auch mit einer sich ständig ändernden Last fertig werden. Würde man dieses bekannte Konzept für große Bewegungsstrecken einsetzen, müßte die Ausgleichsfeder mit einer derart hohen Spannkraft ausgestattet werden, daß der Antriebsmotor viel stärker dimensioniert werden müßte, als es für das Bewegen der beweglichen Einrichtung und der Seiltrommel allein erforderliche wäre.

Der Erfindung liegt die Aufgabe zugrunde, einen Schleppkettenersatz der eingangs angegebenen Art so weiter zu bilden, daß er auch für bewegliche Einrichtungen mit langer Bewegungsbahn geeignet ist, bei möglichst geringer Belastung des Antriebsmotors für die bewegliche Einrichtung.

Dies wird erfindungsgemäß mit einem Schleppkettenersatz der eingangs angegebenen Art erreicht, der dadurch gekennzeichnet ist, daß die Seilanordnung als Flaschenzugeinrichtung mit mindestens einem Flaschenzug mit einer feststehenden Flaschenzugrolle und mindestens einer relativ dazu beweglichen Flaschenzugrolle sowie mit einem festen Seilende und einem relativ dazu beweglichen freien Seilende ausgebildet ist, daß die feststehende Flaschenzugrolle am einen der beiden Endpunkte angeordnet und die bewegliche Flaschenzugrolle durch die Leitungsumlenkrolle bzw. die auf der Leitungsumlenkrollenachse angeordnete Seilrolle gebildet ist und daß das freie Seilende um eine an dem anderen der beiden Endpunkte angeordnete Seilumlenkrolle herumgeführt und an der beweglichen Einrichtung befestigt ist.

Der erfindungsgemäße Schleppkettenersatz kann für nahezu beliebige Längen verwendet werden. Durch Ausbildung als Flaschenzugsystem kann man eine beliebige Kraftuntersetzung schaffen. Auch bei schweren Kabelanordnungen, die mit dem Schleppkettenersatz geführt werden, kann man daher zu recht geringen Belastungen des Antriebsmotors für die bewegliche Einrichtung kommen. Es braucht keine Federkraft wie bei der bekannten Vorrichtung gemäß EP 0 260 225 B1 überwunden zu werden. Der Antriebsmotor ist daher immer der gleichen Belastung ausgesetzt. Er braucht lediglich für diese Kraft ausgelegt zu werden. Eine Überdimensionierung, um mit einer wechselnden Federkraft fertig zu werden, ist nicht erforderlich. Die Kraft, die man dem Antriebsmotor für das Bewegen des Schleppkettenersatzes abfordern möchte, kann man durch Dimensionierung der Flaschenzugeinrichtung einstellen.

Man kann die Leitungsumlenkrolle und/oder die bewegliche Flaschenzugrolle entweder auf einer Unterlage, wie einem Hallenboden, abrollen lassen. Man kann sie auch von der Seilanordnung schwebend halten lassen. Man kann aber auch die axialen Enden der Leitungsumlenkrolle bzw. der beweglichen Flaschenzugrollen mittels einer Führungsnut einer parallel zur Bewegungsbahn der Leitungsumlenkrolle verlaufenden Führungseinrichtung in der gewünschten Bewegungsbahn halten.

Es besteht die Möglichkeit, die Flaschenzugeinrichtung durch einen einzigen Flaschenzug zu bilden, der in der axialen Mitte der Leitungsumlenkrolle angeordnet ist. Insbesondere bei größeren Längen der Bewegungsbahn wird eine Flaschenzugeinrichtung mit zwei parallelen Flaschenzügen bevorzugt. Vorteilhafterweise werden diese an den beiden axialen Enden der Leitungsumlenkrolle angeordnet.

Insbesondere dann, wenn mehrere Leitungen oder Kabel mit unterschiedlichen Durchmessern oder Dicken geführt und/oder mit unterschiedlichem Krümmungsradius um die Leitungsumlenkrolle herumgeführt werden sollen, kann man auf der Achse der Leitungsumlenkrolle mehrere unabhängig zueinander verdrehbare Leitungsumlenkrollen anordnen, deren Durchmesser je an den gewünschten Krümmungsradius und/oder Leitungs- oder Kabeldurchmesser angepaßt sind.

Zusätzlich zu den Leitungen und/oder Kabeln kann man zwischen der feststehenden Einrichtung und der beweglichen Einrichtung eine Leitungstrageinrichtung spannen, die ebenfalls um die Leitungsumlenkrolle umgelenkt wird und sich unterhalb der Leitungsanordnung befindet. Das obere Trum der Leitungsanordnung kann sich dann jeweils auf der Leitungstrageinrichtung abstützen. Besteht die Leitungsanordnung aus einem Bandkabel, kann man als eine solche Leitungstrageinrichtung beispielsweise zwei Tragseile spannen, auf denen sich das Obertrum des Bandkabels ablegen kann.

Anstelle einer Seilanordnung kann man auch eine Ketten-, Zahnriemen- oder Keilriemenanordnung vorsehen. Es ist auch eine Seilanordnung unter Verwendung eines nicht dehnbaren Gummi- oder Kunststoffstranges verwendbar. Die Seil- bzw. Flaschenzugrollen werden dann entsprechend, beispielsweise als Ketten- oder Zahnriemenräder ausgebildet.

Für den Fall, daß die Leitungsanordnung eine Mehrzahl von Leitungen aufweist, die in übereinander befindlichen Lagen geführt werden, wobei die unterschiedlichen Lagen am Umlenkrollenort mit unterschiedlichem radialen Abstand von der Leitungsumlenkrollenachse umgelenkt werden, kann man auf der Leitungsumlenkrollenachse einen teilkreisförmigen Leitungsumlenkkäfig anordnen, der für jede Lage, die sich oberhalb der auf der Leitungsumlenkrolle bzw. den Leitungsumlenkrollen abrollenden Lage befindet, einer Anzahl von je frei drehenden Walzen aufweist, die alle den gleichen radialen Stand von der Leitungsumlenkrollenachse aufweisen und mit Abstand voneinander auf einem Teilkreis von etwa 180° derart angeordnet sind, daß sie die je zugehörige Lage zwischen der beweglichen Einrichtung und der feststehenden Einrichtung umlenken.

Die bewegliche Einrichtung kann man problemlos neben der Flaschenzugeinrichtung anordnen.

Im Gegensatz zur herkömmlichen Schleppkette unterliegt die Leitungsanordnung keinem Abrieb.

Wenn man mit dem erfindungsgemäßen Schleppkettenersatz viele einzelne Leitungen und/oder Einzelkabel führen möchte und dies zu einer entsprechend hohen Anzahl von Einzelrollen der Leitungsumlenkeinrichtung führen würde, kann es im Hinblick auf die Kosten der Einzelrollen, die je kugelgelagert sein sollten, erwägenswert sein, die einzelnen Leitungen bzw. Kabel in einer Kabelführungsvorrichtung anzuordnen und die Kabelführungsvorrichtung ihrerseits um die Umlenkrolle herumzuführen. Als eine solche Kabelführungsvorrichtung könnte man beispielsweise eine herkömmliche Schleppkette verwenden oder einen kanalförmigen Schleppkettenersatz, wie er in der EP 0 490 022 A2 oder in der europäischen Patentanmeldung Nr. 911 201 67.1 beschrieben ist. Eine derartige Schleppkette bzw. eine solcher Schleppkettenersatz kann dann wieder mit einer Leitungstrageinrichtung, beispielsweise in Form zweier Tragseile, abgestützt werden.

Der erfindungsgemäße Schleppkettenersatz eignet sich nicht nur für Bewegungsbahnen mit großer Länge sondern auch für bewegliche Einrichtungen mit hoher Bewegungsgeschwindigkeit. Außerdem kann er nicht nur horizontal sondern auch vertikal und in beliebigen Schräglagen verwendet werden. Aufgrund des Flaschenzugprinzips ist dabei der Kraftaufwand nicht höher als bei horizontaler Anordnung.

Die Erfindung wird nun anhand zweier Ausführungsformen näher erläutert. In den beigefügten Zeichnungen zeigen je in perspektivischer Ansicht und schematischer Darstellung:
- Fig. 1: eine erste Ausführungsform eines erfindungsgemäßen Schleppkettenersatzes; und
- Fig. 2: eine zweite Ausführungsform eines erfindungsgemäßen Schleppkettenersatzes.

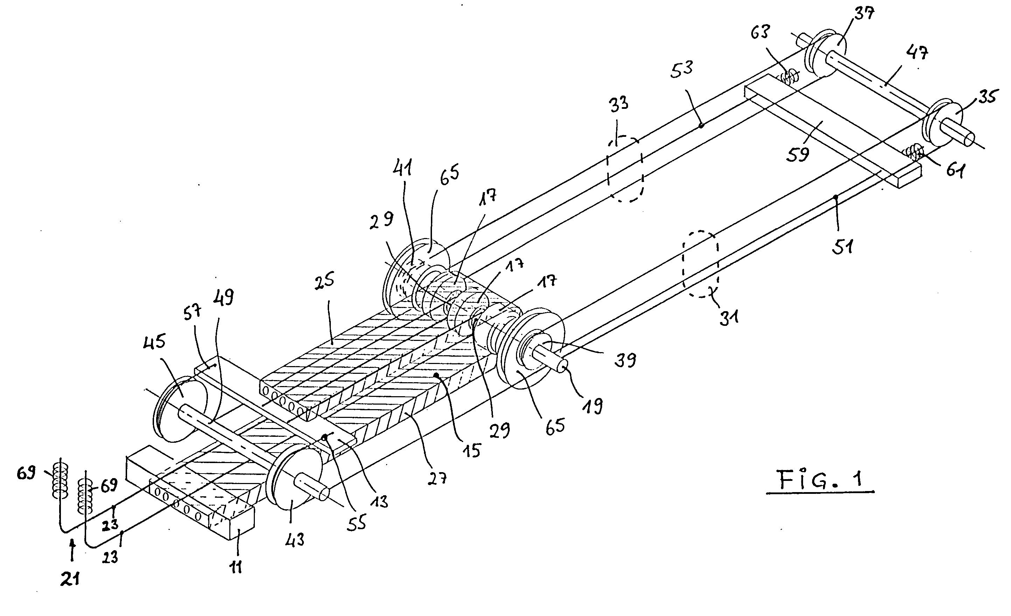

Fig. 1 zeigt links unten eine feststehende Einrichtung 11 und darüber eine hin- und her bewegliche Einrichtung 13. Beide sind über ein Bandkabel 15 miteinander verbunden. Das Bandkabel wird bei der in Fig. 1 dargestellten Ausführungsform mittels dreier Kabelumlenkrollen 17 schleifenartig zwischen der feststehenden Einrichtung 11 und der beweglichen Einrichtung 13 umgelenkt. Dabei rollt das Bandkabel 15 auf den Kabelumlenkrollen 17 ab. Die Kabelumlenkrollen 17 befinden sich auf einer gemeinsamen Welle oder Kabelumlenkrollenachse 19.

Zwischen die bewegliche Einrichtung 13 und eine ortsfeste Stelle 21 in der Nähe der feststehenden Einrichtung 11 sind zwei Tragseile 23 gespannt, die sich innerhalb der Bandkabelschleife befinden. Dadurch kann sich das jeweilige Obertrum 25 des Bandkabels 15 auf den Tragseilen 23 abstützen. Das Untertrum 27 des Bandkabels 15 verläuft unter den Tragseilen 23. Wird das Untertrum 27 auf einer Unterlage, beispielsweise dem Boden einer Werkshalle abgelegt, bedarf es keiner weiteren Unterstützung. Ist eine solche Unterlage nicht vorhanden, kann man unterhalb des Untertrums eine weitere Trageinrichtung anordnen, beispielsweise ebenfalls in Form zweier (nicht dargestellter) Tragseile, die sich mindestens über die maximale Länge des Untertrums erstrecken, die dann erreicht ist, wenn die bewegliche Einrichtung 13 ihren größten Abstand von der feststehenden Einrichtung 11 eingenommen hat.

Die Tragseile 23 werden mittels Tragseilumlenkrollen 29 umgelenkt, die sich auf der Kabelumlenkrollenachse 19 zwischen je zwei benachbarten der Kabelumlenkrollen 17 befinden. Da die Tragseile 23 unterhalb des Obertrums 25 des Bandkabels 15 verlaufen, sind sie mit einem kleineren Krümmungsradius als das Bandkabel 15 um die Kabelumlenkrollenachse 19 geführt und daher sind die Durchmesser der Tragseilumlenkrollen 29 entsprechend kleiner als die der Kabelumlenkrollen 17. Die Kabelumlenkrollen 17 und die Tragseilumlenkrollen 29 sind je unabhängig voneinander frei auf der Kabelumlenkrollenachse 19 drehbar.

Damit das Bandkabel 15 und die Tragseile 23 glatt auf den Kabelumlenkrollen 17 bzw. den Tragseilumlenkrollen 29 abrollen können, muß die Kabelumlenkrollenachse 19 in gleicher Richtung wie die bewegliche Einrichtung 13 jedoch nur mit der halben Geschwindigkeit wie die bewegliche Einrichtung 11 bewegt werden. Dies wird mittels einer Flaschenzugeinrichtung erreicht, die einen ersten (in der Zeichnung vorderen) Flaschenzug 31 und einen parallel dazu verlaufenden (in der Zeichnung hinteren) zweiten Flaschenzug 33 aufweist. Die beiden Flaschenzüge 31 und 33 erstrecken sich in Richtung der Bewegungsbahn der beweglichen Einrichtung 11 auf der einen bzw. der anderen Längsseite des Bandkabels 15. Der erste Flaschenzug 31 und der zweite Flaschenzug 33 weisen je eine feststehende Flaschenzugrolle 35 bzw. 37, je eine bewegliche Flaschenzugrolle 39 bzw. 41 und je eine Seilumlenkrolle 43 bzw. 45 auf. Die beweglichen Flaschenzugrollen 39 und 41 befinden sich auf der Kabelumlenkrollenachse 19 zwischen je einer äußeren der Kabelumlenkrollen 17 und dem einen bzw. anderen Ende der Kabelumlenkrollenachse 19. Die feststehenden Flaschenzugrollen 35 und 37 befinden sich auf einer gemeinsamenorts festen Flaschenzugrollenachse 47. Die Seilumlenkrollen 43 und 45 befinden sich bei der in Fig. 1 dargestellten Ausführungsform auf einer gemeinsamen ortsfesten Seilumlenkrollenachse. Die feststehenden Flaschenzugrollen 37 und 37 können aber auch an unterschiedlichen und unterschiedlich positionierten Flaschenzugrollenachsen angeordnet sein. Die Flaschenzugumlenkrollenachse 47 und die Seilumlenkrollenachse 49 befinden sich an entgegengesetzten Enden der Bewegungsbahn der beweglichen Einrichtung 13, und zwar je außerhalb der Bewegungsbahn.

Wie bei einem Flaschenzug üblich, weist jeder der beiden Flaschenzüge 31 und 33 ein festes Seilende 51 bzw. 53 auf, das in der Nähe der Flaschenzugrollenachse 47 ortsfest fixiert ist, sowie ein freies Seilende 55 bzw. 57, das an der beweglichen Einrichtung 13 befestigt ist, nachdem es um die Seilumlenkrolle 43 bzw. 45 herumgeführt worden ist. Die beiden festen Seilenden 51 und 53 sind an einer feststehenden Leist befestigt. Bei der dargestellten Ausführungsform sind die festen Seilenden 51 und 53 mit je einer Spannvorrichtung, bei dem dargestellten Ausführungsbeispiel in Form einer Spannfeder 61 bzw. 63 versehen, mittels welcher der Flaschenzug nachgespannt werden kann. Damit kann man beispielsweise Längenänderungen ausgleichen, die infolge von Alterung, Temperatureinflüssen usw. auftreten können.

Jedes Flaschenzugseil verläuft also von der Leiste 59 aus beginnend zunächst in Richtung feststehende Einrichtung 11, wird dann mittels Umlenkung durch die bewegliche Flaschenzugrolle 39 bzw. 41 zurückgeführt, verläuft um die feststehende Flaschenzugrolle 35 bzw. 37 herum, erstreckt sich bis zur zugehörigen Seilumlenkrolle 43, 45, wird von dieser umgelenkt und endet in ihrem Befestigungspunkt an der beweglichen Einrichtung 13. Aufgrund des bekannten Flaschenzugprinzips braucht der Antriebsmotor für die bewegliche Einrichtung 13 von der Kraft, die zum Bewegen der Kabelumlenkrollenachse 19 erforderlich ist, nur die Hälfte aufzuwenden. Ebenfalls aufgrund des bekannten Flaschenzugprinzips bewegt sich die Kabelumlenkrollenachse 19 halb so schnell wie die bewegliche Einrichtung 13. Durch Verwendung von Mehrfachflaschenzügen für jeden der beiden Flaschenzüge 31 und 33 kann man die Kraft, welche der Antriebsmotor der beweglichen Einrichtung 13 zum Bewegen der Kabelrollenumlenkachse 19 aufbringen muß, weiter verringern.

Bei der in der Zeichnung dargestellten Ausführungsform ist zwischen den Kabelumlenkrollen 17 und den beweglichen Flaschenzugrollen 39 bzw. 41 je eine Begrenzungsscheibe 65 vorgesehen, deren Durchmesser so bemessen ist, daß er über den Außenumfang des auf den Kabelumlenkrollen 17 befindlichen Bereichs des Bandkabels 15 hinausragt. Damit ist eine gute seitliche Führung des Bandkabels 15 gegeben.

Für den Fall, daß die Kabelrollenanordnung auf einer Unterlage abrollt, beispielsweise einem Boden oder Schienen, können die Begrenzungsscheiben 65 gleichzeitig als Laufräder dienen. Die über die feststehenden Flaschenzugrollen 35, 37 bzw. die beweglichen Flaschenzugrollen 39, 41 bzw. die Seilumlenkrollen 43, 45 überstehenden Achsstummel der Achsen 47 bzw. 19 bzw. 49 werden nur dann benötigt, wenn beidseits der Bewegungsbahn (nicht dargestellte) Führungs- und Montageplatten angeordnet sind, an denen einerseits die Achsstummel der Achsen 47 und 49 befestigt sind und in denen andererseits parallel zur Bewegungsbahn verlaufende Führungsnuten zum Führen der Achsstummel der Kabelumlenkrollenachse 19 vorhanden sind. In diesem Fall wird die Kabelumlenkrollenachse 19 in den Führungsnuten geführt. Dies insbesondere dann, wenn die Kabelumlenkrollenanordnung nicht auf einer Unterlage abrollt.

Genau so wie die Kabelumlenkrollen 17 und die Tragseilumlenkrollen 29 sind auch die beweglichen Flaschenzugrollen 39 und 41 sowie die Begrenzungsscheiben 65 je unabhängig von den anderen Rollen auf der Kabelumlenkrollenachse 19 frei verdrehbar.

Auch die feststehenden Flaschenzugrollen 35, 37 und die Seilumlenkrollen 43, 45 sind auf ihrer Achse 47 bzw. 49 je frei drehbar. Man könnte allerdings die feststehenden Flaschenzugrollen 35 und 37 und/oder die Seilumlenkrollen 43 und 45 auf ihrer jeweiligen Achse 47 bzw. 49 drehfest anordnen und die Achse 47 und/oder 49 insgesamt drehbar lagern.

Wie in der Zeichnung schematisch dargestellt ist, können auch die feststehenden Enden der Tragseile 23 mit je einer eine Feder 69 aufweisenden Spanneinrichtung nachspannbar gemacht werden.

Wenn man in bevorzugter Weise sämtliche Rollen und Begrenzungsscheiben mit Kugellager versieht, ist die Kraft, die für das Bewegen der Kabelumlenkeinrichtung und des Flaschenzugs benötigt wird, besonders gering. Dies führt dann auch zu einer besonders schonenden Führung des Kabels, über das die Kabelumlenkrollen 17 in Drehbewegung versetzt werden. Irgendein Kabelabrieb kann damit praktisch ausgeschlossen werden.

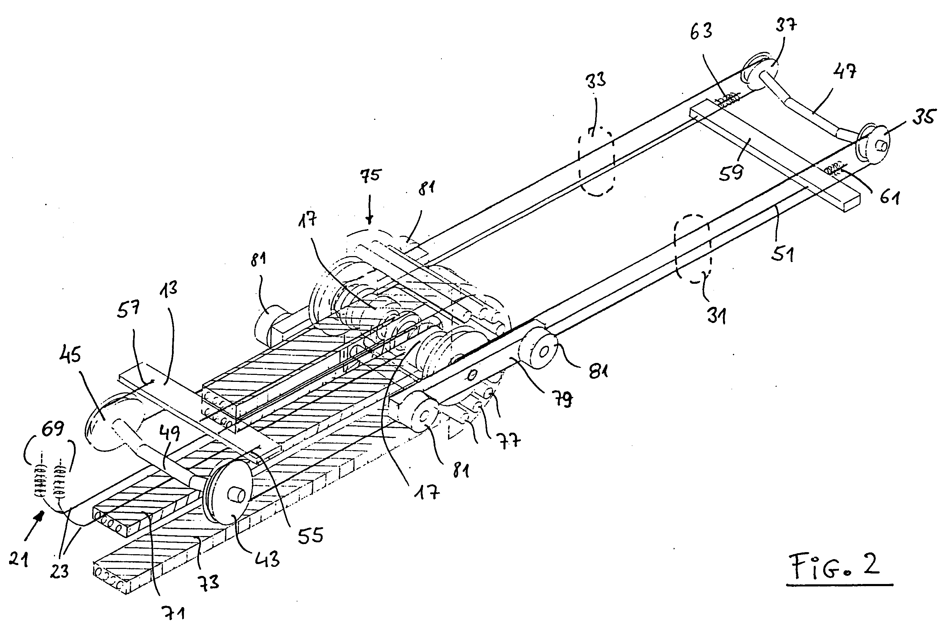

Die zu den Flaschenzügen gehörenden Rollen sind je so dimensioniert und positioniert, daß sich die einzelnen Seilstränge des jeweiligen Flaschenzuges nicht ins Gehege kommen. Bei der in Fig. 1 gezeigten Ausführungsform werden zu diesem Zweck die Achshöhen der Achsen 19, 47 und 49 unterschiedlich gemacht und/oder die darauf befindlichen, zu der Flaschenzugeinrichtung gehörenden Rollen mit unterschiedlichem Durchmesser versehen. Falls man das vermeiden möchte, kann man gemäß der in Fig. 2 gezeigten Ausführungsform die Achsen der feststehenden Flaschenzugrollen 35 und 37 derart schräg stellen, daß die von den feststehenden Flaschenzugrollen 35 und 37 zu den Seilumlenkrollen 43 bzw. 45 verlaufenden Seilstränge gegenüber den beiden anderen Seilsträngen des jeweiligen Flaschenzugs axial nach außen versetzt sind.

Außerdem unterscheidet sich die in Fig. 2 gezeigte Ausführungsform von der in Fig. 1 gezeigten Ausführungsform dadurch, daß die Kabelanordnung aus zwei Bandkabeln besteht, die zwischen der feststehenden Einrichtung 11 und der beweglichen Einrichtung 13 in Form zweier übereinander liegender Kabellagen geführt und umgelenkt werden. Das in der Umlenkschleife innenliegende Bandkabel wird mit der Bezugsziffer 71 gekennzeichnet, während das äußere Bandkabel die Bezugsziffer 73 trägt. Das innere Bandkabel 71 wird genauso wie im Fall der Fig. 1 mittels der Leitungsumlenkrollen 17 umgelenkt. Das äußere Bandkabel 73 dagegen wird im radialen Abstand vom inneren Bandkabel 71 umgelenkt. Zu diesem Zweck ist ein halbkreisförmiger Leitungsumlenkkäfig 75 vorgesehen, der eine halbkreisförmig aufgereihte Vielzahl von sich je frei drehenden Walzen 77 aufweist, auf denen das äußere Bandkabel 73 abrollt. Der Leitungsumlenkkäfig 75 ist koaxial zu den Leitungsumlenkrollen 17 angeordnet. Die beiden seitlichen Enden des Leitungsumlenkkäfigs 75 sind an je einem Schlitten 79 befestigt, dessen Mitte an der Leitungsumlenkrollenachse 19 befestigt ist und an dessen beiden Längsenden je eine Schlittenrolle 81 befestigt ist. Mittels der Schlittenrollen 81 können die Schlitten 79 in Führungsnuten einer (nicht dargestellten) Führungseinrichtung geführt werden.

Mit Ausnahme des zu dem Leitungsumlenkkäfig 75 gehörenden Teilen und der Schrägstellung der Endbereiche der Flaschenzugrollenachse 47 und der Seilumlenkrollenachse 49 stimmen beide Ausführungsformen miteinander überein. Für gleiche Teile werden daher die gleichen Bezugszeichen verwendet.

## Patentansprüche

1. Schleppkettenersatz für die Führung einer beispielsweise elektrischen Leitungsanordnung (15) zwischen einer feststehenden Einrichtung (11) und einer linear hin- und her beweglichen Einrichtung (13),
mit einer Leitungsumlenkrolle (17), um welche ein zwischen der feststehenden Einrichtung (11) und der beweglichen Einrichtung (13) befindlicher Bereich der Leitungsanordnung (15) unter mindestens teilweiser Umschlingung der Leitungsumlenkrolle (17) schleifenförmig herumgeführt ist und die durch Bewegen der beweglichen Einrichtung (13) unter Abrollen der Leitungsanordnung (15) auf der Leitungsumlenkrolle (17) zwischen zwei auf verschiedenen Seiten der Leitungsumlenkrolle (17) befindlichen Endpunkten mit einer Lineargeschwindigkeit hin- und her beweglich ist, die halb so groß wie die Lineargeschwindigkeit der beweglichen Einrichtung (13) ist,
und mit einer zwischen den beiden Endpunkten gespannten Seilanordnung, die an der Leitungsumlenkrolle (17) oder an mindestens einer auf deren Leitungsumlenkrollenachse (19) angeordneten Seilrolle angreift und mittels welcher die Leitungsumlenkrolle (17) zwischen den beiden Endpunkten hin und her bewegbar ist,
**dadurch gekennzeichnet**,
daß die Seilanordnung als Flaschenzugeinrichtung mit mindestens einem Flaschenzug mit einer feststehenden Flaschenzugrolle (35,37) und mindestens einer relativ dazu beweglichen Flaschenzugrolle (39,41) sowie mit einem festen Seilende (51,53) und einem relativ dazu beweglichen freien Seilende (55,57) ausgebildet ist,
daß die feststehende Flaschenzugrolle (35,37) am einen der beiden Endpunkte angeordnet und die bewegliche Flaschenzugrolle (39,41) durch die Leitungsumlenkrolle (17) bzw. die auf deren Leitungsumlenkrollenachse (19) angeordnete Seilrolle gebildet ist,
und daß das freie Seilende (55,57) um eine an dem anderen der beiden Endpunkte angeordnete Seilumlenkrolle (43,45) herumgeführt und an der beweglichen Einrichtung (13) befestigt ist.

2. Schleppkettenersatz nach Anspruch 1,
**dadurch gekennzeichnet**,
daß die Leitungsumlenkrolle (17) und/oder die bewegliche Flaschenzugrolle (39,41) auf einer Unterlage abrollt.

3. Schleppkettenersatz nach Anspruch 1,
**dadurch kekennzeichnet**,
daß die Leitungsumlenkrolle (17) und/oder die bewegliche Flaschenzugrolle (39,41) von der Seilanordnung schwebend gehalten wird.

4. Schleppkettenersatz nach Anspruch 1,
**dadurch gekennzeichnet**,
daß beide Enden einer Leitungsumlenkrollenachse (19) der Leitungsumlenkrolle (17) über die Leitungsumlenkrolle (17) bzw. die bewegliche Flaschenzugrolle (39,41) hinausstehen und daß jedes der beiden Leitungsumlenkrollenachsenden in eine Führungsnut einer parallel zur Bewegungsbahn der Leitungsumlenkrolle (17) verlaufenden Führungseinrichtung hineinragt, mittels welcher die Leitungsumlenkrolle (17) in der gewünschten Bewegungsbahn gehalten wird.

5. Schleppkettenersatz nach mindestens einem der Ansprüche 1 bis 4,
**dadurch gekennzeichnet**,
daß die Leitungsumlenkrolle (17) und die bewegliche Flaschenzugrolle (39,41) insbesondere bei unterschiedlich großen Durchmessern unabhängig voneinander je frei auf der Leitungsumlenkrollenachse (19) drehbar sind.

6. Schleppkettenersatz nach mindestens einem der Ansprüche 1 bis 5,
**dadurch gekennzeichnet**,
daß die Flaschenzugeinrichtung durch einen einzigen Flaschenzug gebildet ist, der mittig zur Leitungsumlenkrolle (17) angeordnet ist.

7. Schleppkettenersatz nach mindestens einem der Ansprüche 1 bis 5,
**dadurch gekennzeichnet**,
daß die Flaschenzugeinrichtung zwei parallele Flaschenzüge aufweist, die bezüglich der axialen Mitte der Leitungsumlenkrolle (17) symmetrisch zueinander angeordnet sind und denen je eine Seilumlenkrolle (43,45) zugeordnet ist.

8. Schleppkettenersatz nach mindestens einem der Ansprüche 5 bis 7,
**dadurch gekennzeichnet**,
daß die Leitungsanordnung (15) eine Mehrzahl von Leitungen aufweist, die am Umlenkrollenort mit unterschiedlichem Krümmungsradius umgelenkt werden ,
und daß auf der selben Leitungsumlenkrollenachse (19) entsprechend viele Leitungsumlenkrollen (17) je unabhängig voneinander drehbar angeordnet sind, deren Rollendurchmesser je auf den gewünschten Krümmungsradius der je zugeordneten Leitung abgestimmt sind.

9. Schleppkettenersatz nach mindestens einem der Ansprüche 1 bis 8,
**dadurch gekennzeichnet**,
daß zwischen der feststehenden Einrichtung (11) und der beweglichen Einrichtung (13) eine innerhalb der Schleife der Leitungsanordnung (15) verlaufende, um die Leitungsumlenkrolle(n) (17) oder eine speziell dafür vorgesehene, auf der Leitungsumlenkrollenachse (19) der Leitungsumlenkrolle (17) angeordnete Tragrolleneinrichtung (29) herumgeführte Leitungstrageinrichtung (23) in Seil-, Band-, Riemen-, Kettenform oder dergleichen angeordnet ist, deren jeweils zwischen der beweglichen Einrichtung (13) und der Leitungsumlenkrolle (17) befindlicher Bereich den jeweils zwischen der beweglichen Einrichtung (13) und der Leitungsumlenkrolle (17) befindlichen Bereich der Leitungsanordnung (15) abstützt.

10. Schleppkettenersatz nach Anspruche 9,
**dadurch gekennzeichnet**,
daß die Leitungstrageinrichtung (23) mindestens an ihrem bei der feststehenden Einrichtung (11) befindlichen Ende mit einer eine Spannfedervorrichtung (69) aufweisenden Spanneinrichtung versehen ist.

11. Schleppkettenersatz nach mindestens einem der Ansprüche 1 bis 10,
**dadurch gekennzeichnet**,
daß die Leitungsanordnung (15) durch ein oder mehrere Rundkabel und/oder Bandkabel und/oder Lichtwellenleiter und/oder Versorgungsschläuche etc. gebildet ist.

12. Schleppkettenersatz nach Anspruch 11 in Verbindung mit Anspruch 9 oder 10,
**dadurch gekennzeichnet**,
daß die Leitungstrageinrichtung zwei Tragseile (23) aufweist, die symmetrisch zur Bandkabelmitte angeordnet sind.

13. Schleppkettenersatz nach mindestens einem der Ansprüche 1 bis 10,
**dadurch gekennzeichnet**,
daß am festen Seilende (51,53) bzw. an den festen Seilenden (51,53) der Flaschenzugeinrichtung eine Seilspanneinrichtung mit einer Spannfedermechanik (69) vorgesehen ist.

14. Schleppkettenersatz nach mindestens einem der Ansprüche 1 bis 13,
**dadurch gekennzeichnet**,
daß anstelle der Seilanordnung eine Ketten-, Zahnriemen-, Keilriemen-, nicht-dehnbare Gummi- oder Kunststoffstrang-Anordnung oder dergleichen Anordnung vorgesehen ist.

15. Schleppkettenersatz nach mindestens einem der Ansprüche 1 bis 14,
**dadurch gekennzeichnet**,
daß die Leitungsanordnung (15) eine Mehrzahl von Leitungen aufweist, die in übereinander befindlichen Lagen geführt werden, wobei die unterschiedlichen Lagen am Umlenkrollenort mit unterschiedlichem radialen Abstand von der Leitungsumlenkrollenachse (19) umgelenkt werden ,
daß auf der Leitungsumlenkrollenachse (19) ein teilkreisförmiger Leitungsumlenkkäfig (75) angeordnet ist, der für jede Lage, die sich oberhalb der auf der Leitungsumlenkrolle (17) bzw. den Leitungsumlenkrollen (17) abrollenden Lage befindet, eine Anzahl von je frei drehenden Walzen (77) aufweist, die vorzugsweise alle den gleichen radialen Abstand von der Leitungsumlenkrollenachse (19) aufweisen und mit Abstand voneinander auf einem Teilkreis von etwa 180° derart angeordnet sind, daß sie die je zugehörige Lage zwischen der beweglichen Einrichtung (13) und der feststehenden Einrichtung (11) umlenken.

16. Schleppkettenersatz nach mindestens einem der Ansprüche 1 bis 15,
**dadurch gekennzeichnet**,
daß die Leitungsanordnung (15) eine Vielzahl von Einzelleitungen aufweist, die mittels einer Leitungsbündelungseinrichtung, beispielsweise in Form einer herkömmlichen Schleppkette oder eines herkömmlichen, insbesondere kanalförmigen Schleppkettenersatzes, zusammengefaßt und gemeinsam über eine Leitungsumlenkrolle (17) umgelenkt werden.

17. Schleppkettenersatz nach Anspruch 16 in Verbindung mit Anspruch 9 oder 10,
**dadurch gekennzeichnet**,
daß sich die Schleppkette bzw. der Schleppkettenersetz auf der Leitungstrageinrichtung (23) abstützt.

18. Schleppkettenersatz nach mindestens einem der Ansprüche 1 bis 17,
**dadurch gekennzeichnet**,
daß die Achsen (47,49) der feststehenden Flaschenzugrolle(n) (35,37) und/oder der Seilumlenkrolle(n) (43,45) gegenüber der Ebene der Bewegungsbahn der beweglichen Einrichtung (13) schräg gestellt sind.
